# EUROPÄISCHE PATENTSCHRIFT

(11) **EP 2 952 875 B1**
(45) Veröffentlichungstag und Bekanntmachung des Hinweises auf die Patenterteilung: **05.08.2020**
(21) Anmeldenummer: 15001651.7
(22) Anmeldetag: 03.06.2015
(51) Int. Cl.: G01N 15/06, G01N 5/02, G01G 3/16, G01N 15/00, G01N 1/22

(54) **GERÄT UND VERFAHREN ZUR MESSUNG EINER AEROSOLKONZENTRATION IN EINEM GASFÖRMIGEN MEDIUM**
DEVICE AND METHOD FOR MEASURING AN AEROSOL CONCENTRATION IN A GASEOUS MEDIUM
APPAREIL ET PROCÉDÉ DE MESURE D'UNE CONCENTRATION D'AÉROSOL DANS UN MILIEU GAZEUX

(30) Priorität: 04.06.2014 DE 102014007977
(43) Veröffentlichungstag der Anmeldung: 09.12.2015
(73) Patentinhaber: Fraunhofer-Gesellschaft zur Förderung der angewandten Forschung e.V., 80686 München (DE)
(72) Erfinder: Merzsch, Stephan, 82024 Taufkirchen (DE); Wasisto, Hutomo Suryo, 38106 Braunschweig (DE); Waag, Andreas, 97076 Würzburg (DE); Uhde, Erik, 38102 Braunschweig (DE); Peiner, Erwin, 38114 Braunschweig (DE)
(74) Vertreter: Cordes, Jörn Christopher

(56) Entgegenhaltungen:
- WO-A1-2013/064157
- US-A- 3 614 677
- US-A1- 2004 232 052
- US-A1- 2013 036 793
- US-A1- 2013 133 441
- ARASH HAJJAM ET AL: "Individual Air-Borne Particle Mass Measurement Using High-Frequency Micromechanical Resonators", IEEE SENSORS JOURNAL, IEEE SERVICE CENTER, NEW YORK, NY, US, Bd. 11, Nr. 11, 1. November 2011 (2011-11-01), Seiten 2883-2890, XP011358381, ISSN: 1530-437X, DOI: 10.1109/JSEN.2011.2147301
- ARASH HAJJAM ET AL: "Fabrication and characterization of thermally actuated micromechanical resonators for airborne particle mass sensing: II. Device fabrication and characterization;Fabrication and characterization of thermally actuated micromechanical resonators for airborne particle mass sensing: II", JOURNAL OF MICROMECHANICS & MICROENGINEERING, INSTITUTE OF PHYSICS PUBLISHING, BRISTOL, GB, Bd. 20, Nr. 12, 18. November 2010 (2010-11-18), Seite 125019, XP020201642, ISSN: 0960-1317, DOI: 10.1088/0960-1317/20/12/125019
- WASISTO HUTOMO SURYO ET AL: "Portable cantilever-based airborne nanoparticle detector", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, Bd. 187, 22. September 2012 (2012-09-22), Seiten 118-127, XP028705834, ISSN: 0925-4005, DOI: 10.1016/J.SNB.2012.09.074

## Beschreibung

Die Erfindung betrifft ein Gerät zur Messung einer Aerosolkonzentration in einem gasförmigen Medium gemäß dem Oberbegriff von Anspruch 1. Die Erfindung betrifft weiterhin ein Verfahren gemäß dem Oberbegriff von Anspruch 10.

Die Nanotechnologie ist ein schnell wachsender Bereich der Wissenschaft und der Industrie. Nanopartikel, also Teilchen mit einer Größe von typischerweise 1 bis 1000 Nanometern, finden sich heute bereits in einer Vielzahl von Anwendungen. So werden Nanopartikel oder Nanotechnologie im Allgemeinen z.B. in der Elektronik, in Bildschirmen, für Batterien, Kraftfahrzeuge, Luft- und Raumfahrt oder im Gesundheitswesen eingesetzt.

Zusätzlich zu den natürlich in der Umgebungsluft vorkommenden Nanopartikeln, die z.B. durch Erosion oder als Pilzsporen in die Luft gelangen, sind mit den genannten Anwendungen auch eine Vielzahl von Quellen von künstlich hergestellten Nanopartikeln entstanden. Es hat sich gezeigt, dass Teilchen mit einer Partikelgröße von unter 100 Nanometern potentiell gesundheitsschädlich sein können bzw. dass ihre toxischen Effekte bei gleicher aufgenommener Masse diejenigen von größeren Partikeln übersteigen können. Eine Aufnahme ist für den Menschen dabei besonders einfach mit der eingeatmeten Luft über die Lunge möglich. Dabei können sich negative Effekte direkt auf die Lunge oder auf andere Systeme des Körpers ergeben, da die Nanopartikel im menschlichen Körper durch ihre Größe bedingt eine hohe Mobilität zeigen.

Neben der allgemeinen Feinstaub-Konzentration in der Luft ist es daher besonders wünschenswert, Geräte zur Überwachung der Arbeitsbedingungen von Menschen, die in der Produktion von Nanopartikeln oder an anderen Stellen, wo solche Nanopartikel als Nebenprodukt in die Luft gelangen können, tätig sind.

Elemente eines gattungsgemäßen Geräts zur Messung einer Aerosolkonzentration sind beispielsweise aus dem Artikel von H.S. Wasisto et al. "Portable cantilever-based airborne nanoparticle detector", veröffentlicht in Sensors and Actuators B 187 (2013), 118-127, bekannt. Der Artikel beschreibt eine Messzelle mit einer Eintrittsöffnung und einer Austrittsöffnung, in der ein aus Silizium gefertigter Schwingbalken oder Cantilever, angeordnet ist. Der Schwingbalken wird mittels eines piezoelektrischen Elements zu Schwingungen angeregt, indem eine sinusförmige Spannung an das piezoelektrische Element angelegt wird. Über eine in den Schwingbalken integrierte piezoresistive Wheatstone-Brücke kann die erzeugte Schwingung ausgelesen und so die Resonanzfrequenz bestimmt werden. Da die Resonanzfrequenz des Schwingbalkens von seiner Masse abhängt, wird diese durch die Anlagerung von Nanopartikeln beeinflusst. Durch ein an den Schwingbalken angelegtes Potential erfahren geladene Nanopartikel eine zum Schwingbalken hin gerichtete Kraft, lagern sich auf diesem ab und beeinflussen so seine Resonanzfrequenz. Die Veränderung der Resonanzfrequenz über einen bestimmten Zeitraum kann also als Maß für die im gleichen Zeitraum angelagerten Nanopartikel dienen. Mittelbar lassen sich so Rückschlüsse auf die Nanopartikelkonzentration in der Umgebungsluft ziehen.

Es hat sich herausgestellt, dass die Anhaftung der Nanopartikel auf dem Schwingbalken bei dem beschriebenen System mangelhaft ist und somit die Effizienz und Genauigkeit des Messgeräts negativ beeinflusst. Ein Teil der angelagerten Teilchen löst sich noch während des Messprozesses wieder vom Schwingbalken, so dass die Messung verfälscht wird. Weiterhin haben beim beschriebenen System auch größere Teilchen Zugang zum Schwingbalken, so dass auch aus diesem Grund Verfälschungen der Messung der Konzentration von Nanopartikeln entstehen können.

In der WO 2013/064157 A1 ist ein gattungsgemäßes Gerät beschrieben, bei dem eine Resonanzfrequenz einer Glasfaser, an der sich die Aerosolpartikel anlagern, ausgewertet wird. Nachteilig an einem solchen System ist, dass geringe Konzentrationen an Nanopartikeln schlecht nachgewiesen werden können, da solche geringen Konzentrationen nur bei hoher Volumenflussrate der durchströmenden Luft sowie hohen Partikelgeschwindigkeiten nachgewiesen werden können, was eine hohe Pumpleistung erfordert.

Aus dem Artikel "Individual Air-Borne Particle Mass Measurement Using High-Frequency Micromechanical Resonators" von Hajjam et al, IEEE Sensors Journal, Vol 11, No. 11, November 2011 ist ein Sensor bekannt, der nanoskalige Partikel mittels einkristalliner, thermisch angeregter Silizium-Nanowaagen misst. Auch ein solcher Sensor ist nur schlecht zur Messung kleiner Konzentrationen an Nanopartikeln geeignet.

Ein ähnlich aufgebauter Sensor ist in dem Artikel "Fabrication and characterization of thermally actuated micromechanical resonators for airborne particle mass sensing: II. Device fabrication and characterization", J. Micromech. Microeng. 20 (2010) (10pp) beschrieben.

In der Druckschrift US 2004/232052 A1 ist eine Vorrichtung zum Sammeln von Partikeln aus der Luft beschrieben, bei dem die Oberfläche des zum Sammeln verwendeten Sammlers eine Nanostrukturierung aus Stäben aufweist.

Es ist daher die Aufgabe der vorliegenden Erfindung, ein hochgenaues, kompaktes und möglichst kostengünstig herzustellendes Gerät zur Messung einer Aerosolkonzentration bereitzustellen, das eine Anhaftung einer möglichst großen Menge von Nanopartikeln an dem Schwingbalken ermöglicht.

Die Erfindung löst das Problem durch ein Gerät mit den Merkmalen von Anspruch 1. Der oszillierenden Spannung oder Wechselspannung kann ein Gleichanteil überlagert sein.

Das Problem wird weiterhin gelöst durch ein Verfahren mit den Merkmalen von Anspruch 10.

Es wird kein piezoelektrisches Element, sondern ein elektrothermisches Element, z.B. ein Heizwiderstand, zur Anregung des Schwingbalkens genutzt. Es hat sich gezeigt, dass auf diese Art und Weise ein definierter Bereich des Schwingbalkens, in dem sich die Nanopartikel anlagern sowie eine geringere Neigung am Schwingbalken haftender Nanopartikel, sich wieder vom Schwingbalken zu lösen, erreicht werden kann. Durch die elektrothermische Anregung des Schwingbalkens lässt sich mit hohem Gütefaktor eine Biegeschwingung in-plane, also in einer Ebene mit der Abscheidefläche der Nanopartikel erreichen. "Out-of-plane" bezeichnet entsprechend die Schwingungsrichtung, die senkrecht zur Ebene der Abscheidefläche steht. Aufgrund eines nicht quadratischen Querschnitts mit einem Breite-zu-Höhe-Verhältnis von z.B. etwa 5 kann die Auslenkung in-plane etwa um den Faktor 25 geringer als out-of-plane sein. Eine möglichst geringe Bewegung im Schwingbalken ist wünschenswert, um Fliehkräfte auf die anhaftenden Nanopartikel zu minimieren und damit eine mögliche Ablösung zu verhindern.

Zur Anregung des Schwingbalkens wird dabei eine Spannung an das elektrothermische Element oder an die elektrothermischen Elemente angelegt, so dass ein elektrischer Strom fließt. Dieser führt zu einer erhöhten Temperatur im Bereich des jeweiligen elektrothermischen Elements und so zu einer entsprechenden räumlichen Ausdehnung. Da das elektrothermische Element eine räumliche Inhomogenität des Schwingbalkens darstellt, kommt es zu einer Formveränderung des Schwingbalkens in Gestalt einer Biegung. Durch geeignete Ausgestaltung des elektrothermischen Elements bzw. der elektrothermischen Elemente kann der Schwingbalken so in Kombination mit der oszillierenden Spannung bzw. mit dem oszillierenden Strom kontrolliert zu einer Schwingung angeregt werden. Die Schwingungsfrequenz entspricht dabei der Frequenz, mit der die Spannung/der Strom oszilliert. Eine oszillierende Spannung bedeutet hierbei eine periodisch veränderte Spannung, die z.B. eine sinusförmige, eine dreieckförmige oder eine rechteckförmige Spannung sein kann. Bevorzugt kann die oszillierende Spannung derart ausgestaltet sein, dass periodisch ein Potential angelegt und wieder ausgeschaltet wird, so dass sich Perioden von Stromfluss und entsprechender Erwärmung mit Perioden ohne Stromfluss und somit einer Abkühlung des elektrothermischen Elements abwechseln.

Die in jeder Periode erreichten Temperaturdifferenzen können dabei im Bereich von einigen Grad Celsius liegen. Ein Schwingbalken aus Silizium mit einer Größe von z.B. 1.000 µm x 170 µm x 15-20 µm (Länge x Breite x Dicke) hat typischerweise eine Resonanzfrequenz im Bereich von 200 kHz. Größere Schwingbalken sind ebenso wie noch kleiner Abmessungen möglich. Für einen Schwingbalken mit Abmessungen von z.B. 2.750 µm x 100 µm x 50 µm liegt die Resonanzfrequenz z.B. im Bereich von etwa 10 kHz. Durch geeignete Positionierung der elektrothermischen Elemente z.B. nahe der Einspannstelle des Schwingbalkens und somit in der Nähe massiver Teile wie z.B. eines Einbaurahmes kann eine schnelle Ableitungsmöglichkeit der eingebrachten Wärme ermöglicht werden, so dass eine elektrothermische Anregung auch mit hohen Frequenzen im Bereich von z.B. 1 kHz bis zu 500 kHz möglich ist.

Prinzipiell ist es möglich, ausschließlich Nanopartikel zu detektieren, die lediglich aufgrund ihrer thermischen Bewegung auf den Schwingbalken treffen und sich dort ablagern. Da aber eine hohe relative Ausbeute der vorhandenen Nanopartikel wünschenswert ist, um die Genauigkeit der Messung zu erhöhen, ist es sinnvoll, die Nanopartikel zum Schwingbalken hin zu leiten.

Dies kann zum einen dadurch geschehen, dass an den Schwingbalken mittels einer Spannungsquelle eine im Wesentlichen konstante Potentialdifferenz von zumindest 200 V gegenüber Erdpotential angelegt wird. Da im Normalfall ein Teil der als Aerosol vorliegenden Nanopartikel eine elektrische Ladung aufweist, kann durch das so erzeugte elektrische Feld mittels Elektrophorese eine auf den Schwingbalken hin gerichtete Kraft auf diese Nanopartikel ausgeübt werden, so dass diese sich bevorzugt am Schwingbalken anlagern. Eine höhere Potentialdifferenz von z.B. zumindest 500 V vergrößert die ausgeübte Kraft und somit die Ausbeute an Nanopartikeln. Wird ein negatives Potential angelegt, so werden positiv geladene Nanopartikel angelagert und umgekehrt. Durchschnittlich sind gleich viele positiv geladene wie negativ geladene Nanopartikel in der Luft vorhanden, so dass im Allgemeinen kein Vorzeichen des angelegten Potentials bevorzugt ist. Alternativ kann durch eine vorgeschaltete Ladestufe der Ladungszustand des analysierten Aerosols eingestellt werden.

Eine weitere Möglichkeit, die Nanopartikel in Richtung des Schwingbalkens zu transportieren ist die Thermophorese. Dabei kann ein Heizelement, das auf eine Temperatur von zumindest 100 °C, bevorzugt von zumindest 400 °C aufgeheizt werden kann, zur Erzeugung eines negativen Temperaturgradienten in Richtung des Schwingbalkens eingesetzt werden. Ein negativer Temperaturgradient in Richtung des Schwingbalkens bedeutet dabei, dass die unmittelbare Umgebungstemperatur des Schwingbalkens niedriger ist als die äußeren Bereiche des Temperaturfeldes. So kann in der Messzelle z.B. umlaufend um den Schwingbalken ein Heizelement angebracht werden, um einen entsprechenden Temperaturgradienten herzustellen z.B. durch eine Heizspule, die symmetrisch um den Schwingbalken herum angeordnet ist. Hierbei ist es entscheidend, den Heizvorgang nicht kontinuierlich, sondern gepulst, z.B. zwischen z.B. 410 °C und 35 °C mit Heiz- und Abkühlzeiten von z.B. etwa 1 min zu betreiben. Bei "abgeschaltetem" Temperaturgradienten können Nanopartikel in die Zone unmittelbar um den Schwingbalken herum gelangen, um dann bei "eingeschaltetem" Temperaturgradienten anschließend auf den Schwingbalken hingetrieben zu werden.

Die Thermophorese hat den Vorteil, dass sie nicht auf eine elektrische Ladung der zu detektierenden Teilchen angewiesen ist. Zum Einfangen der zu detektierenden Nanopartikel können auch beide Methoden kombiniert werden. Außerdem werden mit Thermophorese bevorzugt sehr kleine Nanopartikel mit Durchmessern kleiner als 20 nm erfasst.

Um die Ausbeute an am Schwingbalken angelagerten Partikeln zu erhöhen, umfasst das Gerät weiterhin eine Vorrichtung zum Erzeugen eines Gasstroms des gasförmigen Mediums durch das Messgerät. Es wird so kontinuierlich Umgebungsluft zu- und abgeführt. Durch die zwangsläufig entstehenden Turbulenzen kommen mehr Nanopartikel mit dem Schwingbalken in Kontakt, so dass die Ausbeute weiter erhöht wird. Bei der Vorrichtung zum Erzeugen eines Gasstroms kann es sich um einen Ventilator handeln, der Vorteile aufgrund seiner kompakten Bauweise aufweist. Der Einsatz z.B. einer Pumpe ist aber ebenso denkbar.

Eine Weiterbildung der Erfindung sieht vor, dass der Schwingbalken aus einem dotierten Halbleitermaterial besteht und auf zumindest einer Oberfläche des Schwingbalkens eine Fläche ausgebildet ist, die eine höhere Dotierung als ein Grundkörper des Schwingbalkens aufweist, so dass sich bei einem an dieser Fläche anliegenden negativen bzw. positiven Potential Aerosole bevorzugt auf dieser abscheiden. Zu diesem Zweck kann beispielsweise eine Elektrode aus p-dotiertem Material vorgesehen werden, während das Grundmaterial des Schwingbalkens aus n-dotiertem Material, beispielsweise aus n-dotiertem Silizium, besteht. Ein solcher Schwingbalken ist dann ausgelegt, um positiv oder negativ geladene Teilchen einzusammeln, so dass für die Elektrophorese ein negatives bzw. positives Potential an den Schwingbalken angelegt werden muss. Es hat sich herausgestellt, dass mit einer entsprechenden Dotierung eine verbesserte Haftung der Teilchen auf dem Schwingbalken und eine genauer definierte Abscheidefläche erreicht werden kann Da Feldüberhöhungen an Ecken und Kanten hierbei nicht auftreten, erfolgt die Partikelabscheidung eher flächig gleichmäßig verteilt und nicht bevorzugt an Ecken und Kanten: Es bilden sich keine kettenartigen Agglomerate aus, die sich aufgrund ihrer Trägheit leicht wieder ablösen, sondern an vielen Stellen am Schwingbalken haftende Lagen von Einzelpartikeln.

Durch Abscheiden von Teilchen, die größer als die zu detektierenden Nanopartikel sind, kann es zu deutlichen Verfälschungen der Messung kommen. Es ist daher sinnvoll, Vorkehrungen zu treffen, dass nur eine möglichst geringe Menge von solchen größeren Teilchen auf den Schwingbalken trifft. Eine Möglichkeit, größere Teilchen vom Schwingbalken fernzuhalten, ist der Einsatz eines Filters an der Eintrittsöffnung der Messzelle. Die größeren Teilchen oder Teilchenagglomerate werden so am Eindringen in die Messzelle gehindert. Ein solcher Filter kann eine Porengröße von beispielsweise 5 µm aufweisen. Bevorzugt weist der Filter eine Porengröße von maximal 2,5 µm auf. Es kann sich dabei z.B. um einen Mikrofilter handeln, der aus einer Siliziummembran mit geätzten Löchern besteht. Die Membrandicke und damit die Höhe der Lochwand kann mit z.B. 12 µm so gering sein, dass eine Anlagerung kleiner Partikel, z.B. durch Diffusionsabscheidung aus dem durchströmenden Luftvolumen vernachlässigt werden kann. Es wird so erreicht, dass einerseits nur die zu detektierenden Nanopartikel Einfluss auf die Resonanzfrequenz des Schwingbalkens nehmen und andererseits, dass sich die Messzelle nicht verschmutzt und mit größeren Teilchen zugesetzt wird.

Eine weitere Möglichkeit, um möglichst keine Teilchen einer nicht gewünschten Größenordnung zu detektieren, besteht darin, zwischen der Eintrittsöffnung und dem Schwingbalken einen Impaktor anzuordnen. Ein sogenannter Impaktor ist dabei eine einfache, ggf. kreisförmige Platte, die zentral im Gas- bzw.

Luftstrom zwischen der Eintrittsöffnung und dem Schwingbalken angeordnet ist. Um den Impaktor herum bildet sich eine Strömung aus, die bevorzugt leichtere Teilchen, also hauptsächlich die zu detektierenden Nanopartikel, mit sich reißt. Größere Teilchen prallen aufgrund ihrer größeren Massenträgheit auf den Impaktor und werden dort abgelagert. Sie sind somit aus dem Gasstrom entfernt und können nicht mehr bis zum Schwingbalken gelangen. Bevorzugt ist der Abstand des Impaktors zur Eintrittsöffnung variabel, so dass das Messgerät an verschiedene Umgebungsbedingungen wie z.B. unterschiedliche zu detektierende Partikelgrößen oder -materialien wie künstliche Nanopartikel am Arbeitsplatz oder Rußpartikel im Straßenverkehr angepasst werden kann.

Um die Ausbeute an angelagerten Nanopartikeln zu erhöhen, weist die Oberfläche des Schwingbalkens eine Nanostrukturierung auf. Diese besteht aus auf der Oberfläche des Schwingbalkens angeordneten Nanosäulen mit Durchmessern von typischerweise 300 nm, Höhen von 1 bis 2 µm in einem Rastermaß von typischerweise 500 nm bestehen. Die Herstellung auf dem Schwingbalken ist beispielsweise durch eine Kombination von Nano-Imprint-Lithographie zur Strukturierung der Nanosäulen und Photolithographie zur Strukturierung der Schwingbalken möglich. Es kann dabei entweder zuerst der Photolithographie-Prozess und anschließend der Nano-Imprint-Prozess oder bevorzugt zuerst der Nano-Imprint-Prozess und dann anschließend der Photolithographie-Prozess durchgeführt werden. Durch die deutlich vergrößerte Oberfläche kommen mehr Partikel mit dem Schwingbalken in Berührung und können sich auf diesem anlagern.

Die Messeinrichtung zum Ermitteln der Resonanzfrequenz des Schwingbalkens kann eine Wheatstone-Brücke umfassen. Diese kann integral mit dem Schwingbalken ausgeführt sein. Die Wheatstone-Brücke umfasst ein piezoresistives Element, das in Abhängigkeit des Biegezustands des Schwingbalkens eine Ausgangsspannung liefert. Wenn eine konstante Spannung an die Wheatstone-Brücke angelegt wird, liefert die Wheatstone-Brücke an ihrem Ausgang aufgrund ihres sich in Abhängigkeit vom Biegezustand des Schwingbalkens ändernden elektrischen Widerstands ein mit der aktuellen Schwingungsfrequenz des Schwingbalkens oszillierendes Signal, so dass die Frequenz der Schwingung gemessen werden kann, Über geeignete Mess- bzw. Regelmechanismen kann dann die aktuelle Resonanzfrequenz fo und deren Änderung Δf₀ in einem Zeitintervall Δt bestimmt werden Aus Δf₀/Δt kann dann mittels einer geeigneten Kalibrierung die Aerosolkonzentration im Umgebungsmedium bestimmt werden. Die Messung von Δf₀/Δt erfolgt zyklisch im Wechsel mit der elektrophoretischen bzw. thermophoretischen Partikelsammlung: Während der Messung ist die Sammelspannung abgeschaltet und während der Partikelsammlung ist die Schwingungserregung abgeschaltet.

Eine Ausgestaltungsmöglichkeit für einen solchen Regelmechanismus kann darin bestehen, dass die Messeinrichtung zum Ermitteln der Resonanzfrequenz des Schwingbalkens eine Phasenregelschleife (engl. Phase Locked Loop, PLL) umfasst. Mit Hilfe der Wheatstone-Brücke kann die Amplitude der Schwingung des Schwingbalkens zeitaufgelöst bestimmt werden. Die Anregungsfrequenz kann geändert werden, bis die Amplitude ein Maximum aufweist. Dann ist die aktuelle Resonanzfrequenz eingestellt. Es kann so die Resonanzfrequenz des Schwingbalkens nachverfolgt sowie ihre Verschiebung aufgezeichnet werden. Die Phasenregelschleife besteht im Wesentlichen aus einem Phasendetektor, einem Schleifenfilter und einem spannungsgeregelten Oszillator. Eine Unterstützungselektronik kann aus einem Vorverstärker zur Signalverstärkung am Resonatorausgang bestehen. Durch einen solchen Regelmechanismus kann auch die Frequenz, mit der der Schwingbalken angeregt wird, auf die aktuelle Resonanzfrequenz des Schwingbalkens abgestimmt werden.

Die Anregungsvorrichtung kann wie die Wheatstone-Brücke integral mit dem Schwingbalken ausgeführt sein. Der Schwingbalken ist dann ein selbsterregender, selbstdetektierender Resonator oder Cantilever.

Weitere Bauteile zur Vervollständigung des Messgeräts können ein Energieverteilungsnetzwerk mit einem Hochspannungs-Modul, ein tragbares Gehäuse im Handheld-Format sowie ein Mikrokontroller und Display sein. Ein solcher Prototyp wurde von den Erfindern bereits produziert und getestet. Somit wurde erstmals ein äußerst kompaktes, hochgenaues, einfach zu handhabendes und energiesparendes Gerät zur Messung einer Aerosolkonzentration in der Umgebungsluft hergestellt.

Das Gerät kann z.B. durch drei handelsübliche 1,5V-Batterien oder Akkus mit Strom versorgt werden Das Energieverteilungsnetzwerk versorgt die Anregungseinheit, den Mikrokontroller und das Display mit Strom und beinhaltet weiterhin ein Hochspannungsmodul, das die Elektrophorese-Einheit speist. Die Hochspannung für die Elektrophorese-Einheit kann dabei z.B. im Bereich von 230 V bis 930 V regelbar sein Durch niedrige Leistungsaufnahmen von z.B. 0,04 W bis 0,28 W ergibt sich eine lange Laufzeit des Geräts.

Ein Mikrokontroller kann die Daten aus dem Frequenzmesssystem, z.B. also aus der Phasenregelschleife aufnehmen, weiterverarbeiten und in eine für den Endnutzer sinnvolle Darstellung bringen. Es kann also z.B. die gemessene Frequenzverschiebung des Schwingbalkens, auf dem sich Nanopartikel abgelagert haben, gegenüber der Resonanzfrequenz des "nackten" Schwingbalkens sowie die berechnete Massenkonzentration von Nanopartikeln in der Umgebungsluft angezeigt werden. Weitere Auswertungen, z.B. eine graphische Darstellung der gemessenen Massenkonzentration in Abhängigkeit von der Zeit, sind ebenfalls denkbar und vorgesehen.

Durch das kompakte Gehäuse ist ein Wechsel der Energiequelle leicht möglich. Ebenso kann der Schwingbalken vom Anwender selbst ausgetauscht werden, wenn dieser z.B. ohne weitere Befestigungsmittel reversibel in das Messgerät eingesteckt wird. Federbelastete Kontaktspitzen können dann sowohl für die elektrische Kontaktierung als auch für eine mechanische Befestigung sorgen,

Die Schwingbalken können wiederverwendet werden, wenn sie entsprechend gesäubert worden sind. Dies ist beispielsweise trocken mit einem Strom von gasförmigem Stickstoff oder in einem Nassverfahren möglich. Einfach durchzuführen ist dabei eine Reinigung in einem Ultraschallbad, beispielsweise mit Aceton oder deionisiertem Wasser als flüssigem Medium. Ebenfalls denkbar ist ein Schwingbalken, der eine dünne Opferschicht aufweist, die bei der Reinigung dann zusammen mit den darauf haftenden Nanopartikeln entfernt wird.

Im Folgenden wird die Erfindung anhand der beigefügten Figuren näher erläutert. Dabei zeigt:
- Figur 1: eine schematische Seitenansicht eines erfindungsgemäßen Geräts zur Messung einer Aerosolkonzentration;
- Figur 2: eine schematische Draufsicht auf das Gerät gemäß Figur 1;
- Figur 3: eine Schemazeichnung eines Mikrofilters;
- Figur 4: eine Schemazeichnung eines Impaktors;
- Figur 5: eine schematische Darstellung eines erfindungsgemäßen Schwingbalkens in Draufsicht;
- Figur 6: eine schematische Darstellung eines erfindungsgemäßen Schwingbalkens in Seitenansicht;
- Figur 7: eine schematische Seitenansicht eines nanostrukturierten Schwingbalkens;
- Figur 8: eine Rückansicht eines erfindungsgemäßen Geräts mit einer möglichen Anordnung der Hauptschaltkreise;
- Figur 9: eine schematische Vorderansicht eines erfindungsgemäßen Geräts; sowie
- Figur 10: eine schematische Darstellung des Gas- und Partikelstroms während eines Messvorgangs.

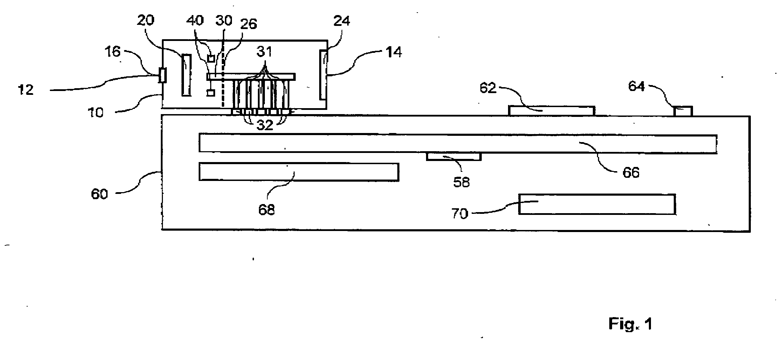

Anhand der Figuren 1 bis 4 soll zunächst das Grundprinzip des Messverfahrens und des Messgeräts erläutert werden, bevor dann auf die spezielle elektrothermische Anregung eingegangen wird. Figur 1 zeigt ein Ausführungsbeispiel eines erfindungsgemäßen Geräts zur Messung einer Aerosolkonzentration. Die Messzelle 10 wird von dem zu untersuchenden Gas durchströmt. Das Gas tritt durch die Eintrittsöffnung 12 ein und durch die Austrittsöffnung 14 aus der Messzelle aus. Der Ventilator 24 sorgt dabei für einen kontinuierlichen Gasstrom durch die Messzelle 10. Innerhalb der Messzelle ist der Schwingbalken 30 angeordnet. Die von dem Gasstrom mitgeführten Aerosole bzw. Nanopartikel lagern sich zumindest teilweise auf dem Schwingbalken 30 ab. Die dadurch veränderte Masse des Schwingbalkens 30 beeinflusst seine Resonanzfrequenz. Um zu verhindern, dass unerwünschte vergleichsweise große Partikel in die Messzelle 10 gelangen, ist an der Eintrittsöffnung 12 der Partikelfilter 16 angeordnet, der die Einlassöffnung 12 teilweise verschließt. Der Partikelfilter 16 überdeckt mit seinem Querschnitt den Querschnitt der Eintrittsöffnung 12 und weist Öffnungen auf, die in der Größenordnung der größten Teilchen, die detektiert werden sollen, liegt. Größere Teilchen werden durch den Partikelfilter bzw. Mikrofilter 16 am Eindringen in die Messzelle 10 gehindert.

Als weitere Maßnahme zum Verhindern der Anlagerung zu großer Teilchen am Schwingbalken 30 ist zwischen dem Schwingbalken 30 und der Einlassöffnung 12 ein Impaktor 20 angeordnet. Dieser ist so positioniert, dass er den kürzesten Weg von der Einlassöffnung 12 zum Schwingbalken 30 blockiert. Es entsteht daher ein Gasstrom um den Impaktor 20 herum. Leichtere und somit kleinere Teilchen werden von dem Gasstrom mit um den Impaktor 20 herum geführt, wohingegen größere und somit schwerere Teilchen gegen den Impaktor 20 prallen, dort abgelagert oder "impaktiert" werden und somit aus dem Gasstrom entfernt werden.

Eine Gegenelektrode 40 ist auf mehreren Seiten des Schwingbalkens 30 angeordnet. Sie kann um den Schwingbalken 30 umlaufend und zum Beispiel ringförmig ausgeführt sein. Die Gegenelektrode 40 kann durch Anlegen eines elektrischen Potenzials dazu genutzt werden, um mittels Elektrophorese eine in Richtung des Schwingbalkens 30 gerichtete Kraft auf die zu detektierenden Teilchen auszuüben, Ebenfalls kann durch ein gegebenenfalls periodisches Erhitzen der Gegenelektrode 40 ein Temperaturgradient innerhalb der Messzelle 10 erzeugt werden, der aufgrund von Thermophorese ebenfalls zu einer Ablagerung der zu detektierenden Teilchen auf dem Schwingbalken 30 führt.

Eine Abgrenzung 26 trennt den Sensormontagebereich vom Partikelsammler. Die Messzelle 10 weist weiterhin federbelastete Kontaktstifte 31 auf, die den Schwingbalken 30 sowohl fixieren als auch elektrisch kontaktieren. Es ist so ein einfaches Wechseln des Schwingbalkens 30 ohne aufwendige Löt-, Schraub- oder sonstige Fixiermaßnahmen möglich. Die Kontaktstifte 31 gehen in Stifte 32 über, mit denen eine Verbindung zum Gehäuse 60 hergestellt werden kann. Auf der Oberseite des Gehäuses 60 sind ein LCD-Display 62 und ein Ein-/AusSchalter 64 vorhanden. Im Gehäuse selbst sind ein Hochspannungs-Modul 68, eine Batterie 70 sowie verschiedene Mess-, Regel- und Speicherschaltkreise 66 vorhanden.

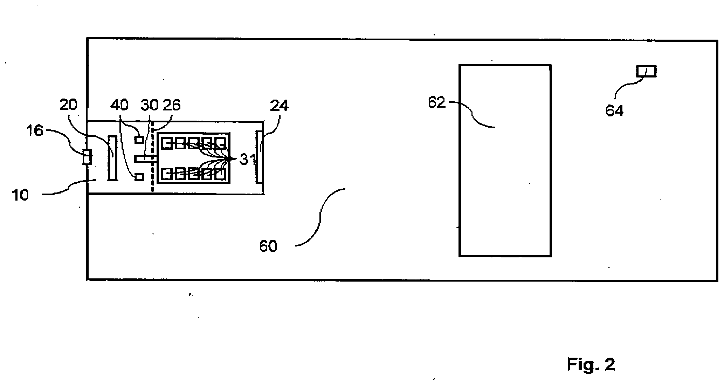

Figur 2 zeigt eine Draufsicht auf das Gerät gemäß Figur 1. Neben dem Gehäuse 60 mit dem LCD-Display 62 und dem Ein-/Aus-Schalter 64 ist die Messzelle 10 mit dem Mikrofilter 16, dem Impaktor 20, der Gegenelektrode 40, dem Schwingbalken 30, den federbelasteten Kontaktstiften 31 sowie dem Ventilator 24 zu erkennen. Die Abgrenzung 26 trennt auch hier den Sensormontagebereich vom Partikelsammler.

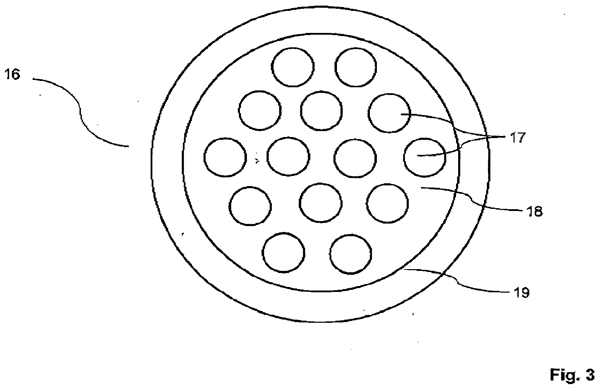

Figur 3 zeigt eine schematische Darstellung eines Mikrofilters 16. Der Mikrofilter 16 besteht aus einem Filterrahmen 19, der eine Siliziummembran 18 trägt, welche eine Dicke von 12 µm aufweist. In die Siliziummembran 18 sind Löcher 17 geätzt. Die Löcher 17 weisen einen Durchmesser von 2,5 µm auf. Die Darstellung ist nicht maßstabsgerecht.

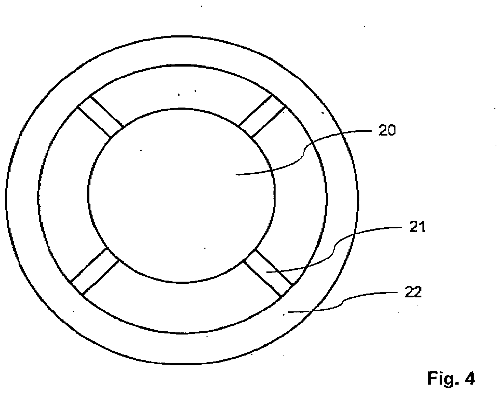

Figur 4 zeigt einen Impaktor 20, der mittels des Impaktorhalters 21 im Impaktorrahmen 22 befestigt ist. im zusammengefügten Zustand des erfindungsgemäßen Geräts befindet sich der Schwingbalken 30 in Stromrichtung des Gasstroms zentral hinter dem Impaktor 20. Ein Teilchen, das sich auf dem Schwingbalken anlagert, muss somit im radial äußeren Bereich der Messzelle 10 den Impaktor 20 passieren und danach eine Bewegung nach innen auf den Schwingbalken 30 zu ausführen. Dies ist umso wahrscheinlicher, je kleiner und somit auch leichter die Teilchen sind. Größere Teilchen prallen mit hoher Wahrscheinlichkeit gegen den Impaktor 20 und werden so aus dem Gasstrom entfernt, oder verlassen die Messzelle durch die Austrittsöffnung wieder.

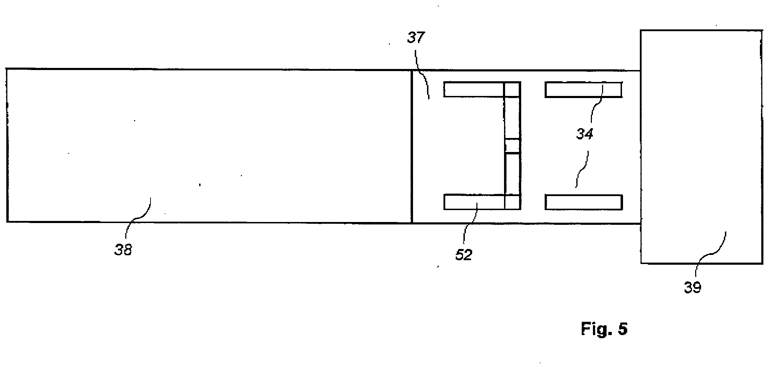

Figur 5 zeigt eine vergrößerte Darstellung eines erfindungsgemäßen Schwingbalkens bzw. Cantilevers 30. Im linken Bereich der Figur ist die p-leitende Nanopartikel-Sammelfläche 38 zu sehen, an der sich die Nanopartikel ablagern. Rechts ist der aus Silizium bestehende Montagerahmen 39 zur Befestigung des Schwingbalkens 30 und zur Aufnahme der Kontakte zu sehen. Der rechte Bereich des Schwingbalkens 30 ist als n-leitender Bereich 37 ausgeführt. In diesem n-leitendem Bereich 37 befinden sich eine p-leitende, U-förmige piezoresistive Wheatstonesche Brücke 52 sowie zwei p-leitende Heizwiderstände 34. Im Messbetrieb werden die Heizwiderstände 34 mit einer oszillierenden Spannung beaufschlagt, so dass ein entsprechender Strom durch die Widerstände 34 fließt. Die Widerstände 34 dehnen sich periodisch aus und der Schwingbalken 30 wird in Schwingungen versetzt. Mittels der Wheatstoneschen Brücke 52 kann die aktuelle Frequenz ausgelesen werden. Mittels eines geeigneten Regelmechanismus kann dann die Resonanzfrequenz ermittelt werden,

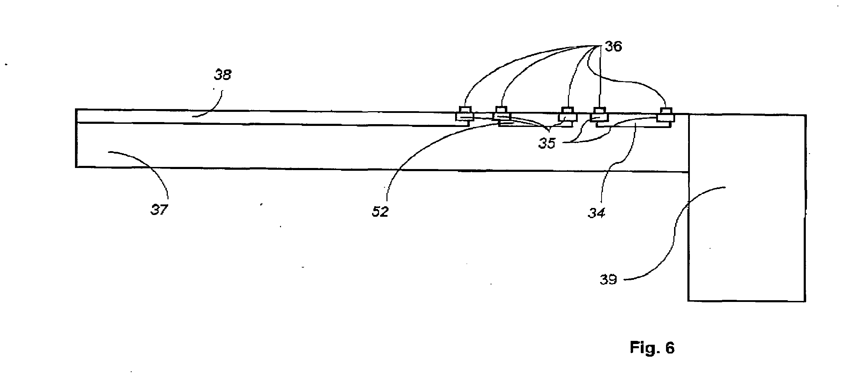

Figur 6 zeigt eine seitliche Schnittansicht des Schwingbalkens 30 gemäß Figur 5. Auch hier ist zu erkennen, dass der Schwingbalken 30 zum größten Teil aus n-leitendem Silizium 37 aufgebaut ist. Neben dem Montagerahmen 39, den Heizwiderständen 34 und der Wheatstoneschen Brücke 52 ist hier zu erkennen, dass auf dem Schwingbalken 30 Metallkontakte 36, die aus Chrom und Gold bestehen, aufgebracht sind. Jeweils unter diesen elektrischen Kontakten 36 sind p⁺-dotierte Bereiche zur Herstellung der ohmschen Kontakte vorhanden.

Die Heizwiderstände 34 sind aus p-leitendem Silizium hergestellt. Es wird so ein den Stromfluss sperrender p/n-Übergang zwischen dem Bereich des Heizwiderstands 34 und dem n-leitenden Grundkörper 37 des Schwingbalkens 30 erzeugt. Es ist dadurch möglich, einen Strom durch ausgewählte Bereiche des Schwingbalkens 30, in diesem Fall also durch die Heizwiderstände 34, zu leiten, so dass sich lediglich diese Bereiche erwärmen. Die Heizwiderstände 34, die hier die elektrothermischen Elemente darstellen, sind oberflächennah angeordnet. Eine Ausdehnung der Heizwiderstände 34 kann daher auch zur Anregung einer vertikalen Resonanzschwingung mit einer Verbiegung des Schwingbalkens 30 nach unten führen.

Mit alternativen Designs der Heizwiderstände 34 und/oder einer angepassten Ansteuerung kann die Schwingungsrichtung beeinflusst werden. So können z.B. die in Figur 5 gezeigten beiden Heizwiderstände 34 abwechselnd mit Strom versorgt werden, so dass dann eine Schwingung angeregt wird, die in der Darstellung gemäß Figur 5 vertikal verläuft und entsprechend der Darstellung gemäß Figur 6 senkrecht zur Papierebene steht. Um eine solche Schwingung noch effizienter anzuregen, können die Positionen der Heizwiderstände 34 innerhalb des Schwingbalkens 30 angepasst werden, also z.B. oberflächenferner ausgestaltet werden. Die verwendeten Ströme liegen dabei z.B. im Bereich von einigen mA und die eingebrachte Wärmeleistung im Bereich von einigen mW.

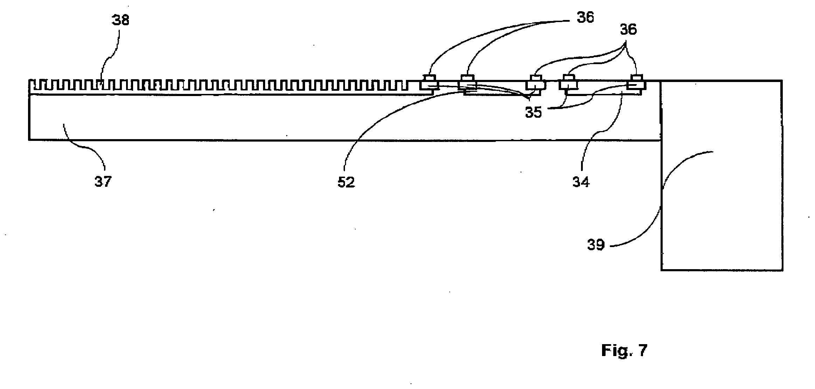

Figur 7 zeigt einen der Darstellung in Figur 6 entsprechenden Schwingbalken 30, dessen Oberfläche jedoch nanostrukturiert ist, um den zu detektierenden Teilchen eine größere Fläche zur Verfügung zu stellen. Im gezeigten Beispiel besteht die Sammelfläche 38 aus einem Silizium-Nanosäulen-Array.

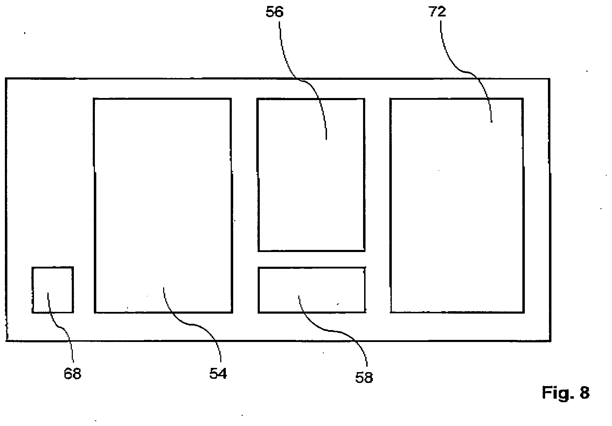

Figur 8 zeigt eine Draufsicht auf die Platine, die die Hauptschaltkreise 66 gemäß Figur 1 beherbergt. Im Einzelnen sind dies die phasenregelschleifenbasierte Frequenznachführung (PLL) 54, ein Mikrocontroller 56, eine Speichereinheit, die in diesem Fall als SD-Speicherkarte 58 ausgeführt ist, ein Hochspannungsmodul 68 sowie das Leistungsverteilnetzwerk 72.

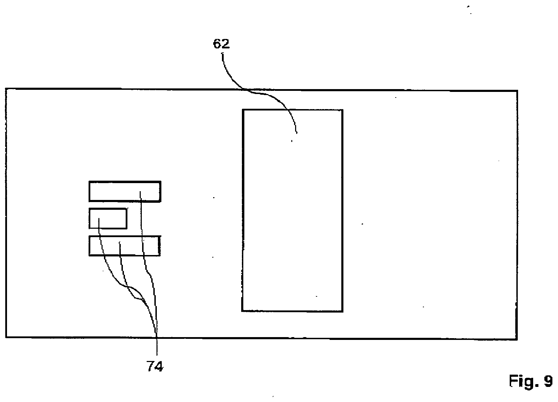

Die Figur 9 zeigt die Platine gemäß Figur 8 in der Vorderansicht. Zu erkennen ist hier das LCD-Display 62 sowie verschiedene Steckanschlüsse 74 zum Anschluss des elektrostatischen bzw. thermophoretischen Partikelsammlers.

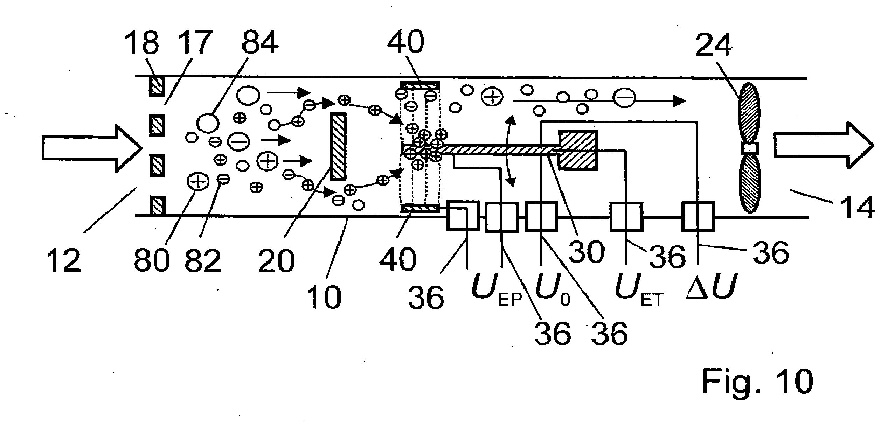

Figur 10 zeigt schematisch den Gas- und Partikelstrom durch die Messzelle 10 und veranschaulicht die Wirkungsweise des Impaktors 20. Der durch den Ventilator 24 erzeugte Gas- und Partikelstrom ist durch die Pfeile angedeutet. Im linken Bereich der Figur wird durch die Eintrittsöffnung 12 Gas angesaugt, welches die Messzelle 10 im rechten Bereich der Figur durch die Austrittsöffnung 14 wieder verlässt. Im Gasstrom werden Nanopartikel bzw. Aerosole 80, 82, 84 mitgeführt, die positiv oder negativ geladen oder elektrisch neutral sein können. Die positiv geladenen Nanopartikel sind mit dem Bezugszeichen 80, die negativ geladenen Nanopartikel mit dem Bezugszeichen 82 und die neutralen Nanopartikel mit dem Bezugszeichen 84 gekennzeichnet,

Augrund des sich im Gasstrom befindlichen Impaktors 20 erfolgt eine Strömung um den Impaktor 20 herum. Je kleiner die Teilchen 80, 82, 84 sind, umso größer ist die Wahrscheinlichkeit, dass die Teilchen 80, 82, 84 dem Gasstrom um den Impaktor 20 herum folgen. Größere Teilchen 80, 82, 84 treffen mit höherer Wahrscheinlichkeit auf den Impaktor 20 und werden so aus dem Gasstrom entfernt. Da sich der Schwingbalken 30 im "Windschatten" des Impaktors 20 befindet, müssen die Nanopartikel 80, 82, 84, hinter dem Impaktor 20 eine Bewegung nach axial innen ausführen, um zum Schwingbalken 30 zu gelangen. Auch diese Bewegung tritt mit größerer Wahrscheinlichkeit für kleinere Teilchen 80, 82, 84 auf, so dass auch dieser Effekt die Größenselektion der detektierten Teilchen verstärkt.

In Figur 10 sind weiterhin die Metallkontakte 36 zu sehen, an denen die Elektrophoresespannung U_{EP}, die elektrothermische Anregungsspannung u_{ET}, die Speisespannung Uo und die Ausgangsspannung ΔU der Wheatstone-Brücke angelegt werden. Im gezeigten Beispiel ist die Elektrophoresespannung U_{ESP} negativ, so dass positiv geladene Nanopartikel 80 auf dem Schwingbalken 30 abgelagert werden. Die neutralen Teilchen 84 und die negativ geladenen Teilchen 82 kommen überwiegend nicht mit den Schwingbalken 30 in Kontakt und verlassen die Messzelle 10 durch die Austrittsöffnung 14.

Die angelagerten Nanopartikel 80 beeinflussen die Resonanzfrequenz des Schwingbalkens 30. Mittels der Messspannung uₛₑₙₛ wird ein Regelkreis gesteuert, der die Anregungsspannung uₐₖₗ auf die aktuelle Resonanzfrequenz einstellt. Der zeitliche Verlauf der Resonanzfrequenz wird aufgezeichnet und weiterverarbeitet.

**Bezugszeichenliste:**

| | | | |
|---|---|---|---|
| 10 | Messzelle | 52 | Wheatstonesche Brücke |
| 12 | Eintrittsöffnung | 54 | PLL |
| 14 | Austrittsöffnung | 56 | Mikrocontroller |
| 16 | Partikelfilter | 58 | SD-Speicherkarte |
| 17 | Löcher | | |
| 18 | Siliziummembran | 60 | Gehäuse |
| 19 | Filterrahmen | 62 64 | LCD-Display Schalter |
| 20 | Impaktor | 66 | Hauptschaltkreise |
| 21 | Impaktorhalter | 68 | Hochspannungsmodul |
| 22 | Impaktorrahmen | | |
| 24 | Ventilator | 70 | Batterie |
| 26 | Abgrenzung | 72 | Leistungsverteilnetzwerk |
| | | 74 | Steckanschlüsse |
| 30 | Schwingbalken | | |
| 31 | Kontaktstifte | 80 | positives Teilchen |
| 32 | Stifte | 82 | negatives Teilchen |
| 34 | Heizwiderstand | 84 | neutrales Teilchen |
| 36 | Metallkontakte | | |
| 37 | n-leitendes Silizium | | |
| 38 | Sammelfläche | | |
| 39 | Montagerahmen | | |
| 40 | Gegenelektrode/Heizelement | | |

## Patentansprüche

1. Gerät zur Messung einer Aerosolkonzentration in einem gasförmigen Medium, umfassend
(i) eine Messzelle (10) mit einem Gehäuse (60) mit einer Eintrittsöffnung (12) und einer Austrittsöffnung (14),
(ii) einen Schwingbalken (30), der zu Schwingungen angeregt werden kann,
(iii) eine Anregungsvorrichtung (34), um den Schwingbalken (30) zu Schwingungen anzuregen,
(iv) eine Vorrichtung zum Erzeugen eines Gasstroms (24) des gasförmigen Mediums durch das Messgerät und
(v) eine Messeinrichtung (52) zum Ermitteln einer Resonanzfrequenz des Schwingbalkens (30),
(vi) wobei die Anregungsvorrichtung ein elektrothermisches Element (34) umfasst, welches den Schwingbalken (30) zu Schwingungen anregt, wenn eine oszillierende Spannung an das elektrothermische Element (34) angelegt wird,
**dadurch gekennzeichnet, dass**
(vii) die Oberfläche (38) des Schwingbalkens (30) eine Nanostrukturierung aufweist, die aus auf der Oberfläche (38) des Schwingbalkens angeordneten Nanosäulen besteht und dass
(viii) die Nanosäulen in einem Rastermaß von 500 nm angeordnet sind und einen Durchmesser von 300 nm und eine Höhe von 1 - 2 µm haben.

2. Gerät nach einem der vorstehenden Ansprüche, **gekennzeichnet durch** eine Spannungsquelle, die eingerichtet ist, um an den Schwingbalken (30) eine im Wesentlichen konstante Potentialdifferenz von zumindest 200 V, bevorzugt von zumindest 500 V gegenüber dem Gehäuse (60) der Messzelle (10) anzulegen.

3. Gerät nach einem der vorstehenden Ansprüche, **dadurch gekennzeichnet, dass** es ein Heizelement (40) zur Erzeugung eines negativen Temperaturgradienten in Richtung des Schwingbalkens (30) umfasst.

4. Gerät nach einem der vorstehenden Ansprüche, **dadurch gekennzeichnet, dass** der Schwingbalken (30) aus einem dotierten Halbleitermaterial besteht und auf zumindest einer Oberfläche (38) des Schwingbalkens (30) eine Fläche ausgebildet ist, die eine höhere Dotierung als ein Grundkörper des Schwingbalkens (30) aufweist.

5. Gerät nach einem der vorstehenden Ansprüche, **dadurch gekennzeichnet, dass** ein Filter (16) mit einer Porengröße von höchstens 5 µm, bevorzugt von höchstens 2,5 µm vor der Eintrittsöffnung (12) der Messzelle (10) angeordnet ist, so dass größere Teilchen am Eindringen in die Messzelle (10) gehindert werden.

6. Gerät nach einem der vorstehenden Ansprüche, **dadurch gekennzeichnet, dass** zwischen der Eintrittsöffnung (12) und dem Schwingbalken (30) ein Impaktor (20) angeordnet ist.

7. Gerät nach einem der vorstehenden Ansprüche, **dadurch gekennzeichnet, dass** die Messeinrichtung zum Ermitteln der Resonanzfrequenz des Schwingbalkens (30) eine Wheatstone-Brücke (52) umfasst.

8. Gerät nach einem der vorstehenden Ansprüche, **dadurch gekennzeichnet, dass** die Messeinrichtung zum Ermitteln der Resonanzfrequenz des Schwingbalkens (30) eine Phasenregelschleife (54) umfasst.

9. Verfahren zur Messung einer Aerosolkonzentration in einem gasförmigen Medium, mit den Schritten:
(i) Anregen eines Schwingbalkens (30) zu Schwingungen mit einer Resonanzfrequenz des Schwingbalkens (30),
(ii) Abscheiden von in dem gasförmigen Medium vorhandenen Aerosolen (80, 82) auf dem Schwingbalken (30),
(iii) zeitaufgelöstes Ermitteln der jeweiligen momentanen Resonanzfrequenz des Schwingbalkens (30),
(iv) Weiterverarbeiten der ermittelten Resonanzfrequenzen,
(iv) wobei der Schwingbalken (30) mittels eines elektrothermischen Elements (34) angeregt wird,
**dadurch gekennzeichnet, dass**
(v) die Oberfläche (39) des Schwingbalkens (30) eine Nanostrukturierung aufweist, die aus auf der Oberfläche (38) des Schwingbalkens angeordneten Nanosäulen besteht und dass
(vi) die Nanosäulen in einem Rastermaß von 500 nm angeordnet sind und einen Durchmesser von 300 nm und eine Höhe von 1 - 2 µm haben.

## Claims

1. A device for measuring an aerosol concentration in a gaseous medium, comprising
(i) a measurement cell (10) with a housing (60) with an entry opening (12) and an exit opening (14),
(ii) an oscillating beam (30), which can be excited to oscillate,
(iii) an excitation device (34) to excite the oscillating beam (30) to oscillations,
(iv) a device for generating a gas flow (24) of the gaseous medium through the measuring device and
(v) a measurement installation (52) for determining a resonance frequency of the oscillating beam (30),
(vi) wherein the excitation device features an electrothermic element (34) which excites the oscillating beam (30) to oscillations when an oscillating voltage is applied to the electrothermal element (34),
**characterised by** the fact that
(vii) the surface (38) of the oscillating beam (30) features a nanostructure which consists of nanocolumns arranged on the surface (38) of the oscillating beam and that
(viii) the nanocolumns are arranged in a grid of 500 nm and have a diameter of 300 nm and a height of 1 - 2 µm.

2. The device according to one of the above claims, **characterised by** a voltage source, which is configured to apply a fundamentally constant difference in potential to the oscillating beam (30), wherein said difference in potential is at least 200 V, preferably at least 500 V, in relation to the housing (60) of the measurement cell (10).

3. The device according to one of the above claims, **characterised by** the fact that it comprises a heating element (40) for generating a negative temperature gradient towards to oscillating beam (30).

4. The device according to one of the above claims, **characterised by** the fact that the oscillating beam (30) is made of a doped semi-conductive material and that at least one surface (38) of the oscillating beam (30) is designed to have an area that features a higher doping than a base body of the oscillating beam (30).

5. The device according to one of the above claims, **characterised by** the fact that a filter (16) with a pore size of at most 5 µm, preferably at most 2.5 µm, is arranged in front of the entry opening (12) of the measurement cell (10), so that larger particles are prevented from entering the measurement cell (10).

6. The device according to one of the above claims, **characterised by** the fact that an impactor (20) is arranged between the entry opening (12) and the oscillating beam (30).

7. The device according to one of the above claims, **characterised by** the fact that the measurement installation comprises a Wheatstone bridge (52) to determine the resonance frequency of the oscillating beam (30).

8. The device according to one of the above claims, **characterised by** the fact that the measurement installation comprises a phase-locked loop (54) to determine the resonance frequency of the oscillating beam (30).

9. A method for measuring an aerosol concentration in a gaseous medium, comprising the steps:
(i) excitement an oscillating beam (30) to oscillations with a resonance frequency of the oscillating beam (30),
(ii) separation of aerosols (80, 82) present in the gaseous medium on the oscillating beam (30),
(iii) time-resolved determination of the respective current resonance frequency of the oscillating beam (30),
(iv) further processing of the determined resonance frequencies,
(iv) wherein the oscillating beam (30) is excited by means of an electrothermic element (34),
**characterised by** the fact that
(v) the surface (39) of the oscillating beam (30) features a nanostructure which consists of nanocolumns arranged on the surface (38) of the oscillating beam and that
(vi) the nanocolumns are arranged in a grid of 500 nm and have a diameter of 300 nm and a height of 1 - 2 µm.

## Revendications

1. Appareil de mesure d'une concentration d'aérosol dans un milieu gazeux, comprenant
(i) une cellule de mesure (10) avec un boîtier (60) pourvu d'une ouverture d'entrée (12) et d'une ouverture de sortie (14),
(ii) un barreau vibrant (30) susceptible d'être excité à des vibrations,
(iii) un dispositif d'excitation (34) pour exciter le barreau vibrant (30) à des vibrations,
(iv) un dispositif pour générer un flux gazeux (24) du milieu gazeux à travers l'appareil de mesure, et
(v) un dispositif de mesure (52) pour déterminer une fréquence de résonance du barreau vibrant (30),
(vi) le dispositif d'excitation comprenant un élément électrothermique (34) qui excite le barreau vibrant (30) à des vibrations lorsqu'une tension oscillante est appliquée à l'élément électrothermique (34),
**caractérisé en ce que**
(vii) la surface (38) du barreau vibrant (30) présente une nanostructure constituée de nanopiliers disposés sur la surface (38) du barreau vibrant, et **en ce que**
(viii) les nanopiliers sont disposés dans une trame de 500 nm et ont un diamètre de 300 nm et une hauteur de 1 à 2 µm.

2. Appareil selon la revendication précédente,
**caractérisé par**
une source de tension qui est conçue pour appliquer au barreau vibrant (30) une différence de potentiel sensiblement constante d'au moins 200 V, de préférence d'au moins 500 V, par rapport au boîtier (60) de la cellule de mesure (10).

3. Appareil selon l'une des revendications précédentes,
**caractérisé en ce que**
il comprend un élément de chauffage (40) pour engendrer un gradient de température négatif en direction du barreau vibrant (30).

4. Appareil selon l'une des revendications précédentes,
**caractérisé en ce que**
le barreau vibrant (30) est constitué en un matériau semi-conducteur dopé et sur au moins une surface (38) du barreau vibrant (30) est réalisée une face qui présente un dopage supérieur à celui d'un corps de base du barreau vibrant (30).

5. Appareil selon l'une des revendications précédentes,
**caractérisé en ce que**
un filtre (16) ayant une taille de pores de 5 µm au maximum, de préférence de 2,5 µm au maximum, est disposé devant l'ouverture d'entrée (12) de la cellule de mesure (10), de sorte que des particules plus grandes sont empêchées de pénétrer dans la cellule de mesure (10).

6. Appareil selon l'une des revendications précédentes,
**caractérisé en ce que**
un impacteur (20) est disposé entre l'ouverture d'entrée (12) et le barreau vibrant (30).

7. Appareil selon l'une des revendications précédentes,
**caractérisé en ce que**
le dispositif de mesure pour déterminer la fréquence de résonance du barreau vibrant (30) comprend un pont de Wheatstone (52).

8. Appareil selon l'une des revendications précédentes,
**caractérisé en ce que**
le dispositif de mesure pour déterminer la fréquence de résonance du barreau vibrant (30) comprend une boucle à phase asservie (54).

9. Procédé de mesure d'une concentration d'aérosol dans un milieu gazeux, comprenant les étapes consistant à :
(i) exciter un barreau vibrant (30) à des vibrations à une fréquence de résonance du barreau vibrant (30),
(ii) faire déposer des aérosols (80, 82), présents dans le milieu gazeux, sur le barreau vibrant (30),
(iii) déterminer la fréquence de résonance momentanée respective du barreau vibrant (30) avec résolution temporelle,
(iv) traiter les fréquences de résonance déterminées,
(iv) le barreau vibrant (30) étant excité à l'aide d'un élément électrothermique (34),
**caractérisé en ce que**
(v) la surface (38) du barreau vibrant (30) présente une nanostructure constituée de nanopiliers disposés sur la surface (38) du barreau vibrant, et **en ce que**
(viii) les nanopiliers sont disposés dans une trame de 500 nm et ont un diamètre de 300 nm et une hauteur de 1 à 2 µm.
